(19) Europäisches Patentamt
European Patent Office
Office européen des brevets

(11) **EP 2 916 555 A1**

(12) **EUROPEAN PATENT APPLICATION**

(43) Date of publication:
**09.09.2015 Bulletin 2015/37**

(21) Application number: **14306801.3**

(22) Date of filing: **13.11.2014**

(51) Int Cl.:
*H04N 21/2343* [(2011.01)]  *H04N 21/845* [(2011.01)]
*H04N 21/24* [(2011.01)]  *H04L 12/26* [(2006.01)]
*H04L 29/06* [(2006.01)]  *H04N 21/442* [(2011.01)]
*H04N 21/658* [(2011.01)]

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.03.2014 EP 14305323**

(71) Applicant: **ALCATEL LUCENT
92100 Boulogne-Billancourt (FR)**

(72) Inventors:
• **Wu, Tingyao
  2018 Antwerpen (BE)**

• **Lou, Zhe
  2018 Antwerpen (BE)**
• **Huysegems, Rafaël
  2018 Antwerpen (BE)**
• **De Vleeschauwer, Bart
  2018 Antwerpen (BE)**

(74) Representative: **ALU Antw Patent Attorneys
Intellectual Property and Standards
Copernicuslaan 50
2018 Antwerp (BE)**

(54) **Method to determine re-buffering events in video sessions**

(57)     A Method for determining the existence of re-buffering events in an http adaptive streaming video session between a client and a server, in a network node, comprises the steps of, in an operational mode:
- Gathering subsequent http GET messages for said video session
- Extracting a feature vector for said video session
- Comparing said feature vector with a task dependent feature set determined during an earlier performed training mode, such as to obtain a reduced feature set for said video session
- Deriving from said reduced feature set an indication of whether said video session contains a re-buffering event or not.

Fig. 5

## EP 2 916 555 A1

**Description**

The present invention is taking priority on European Patent Application number 14305323.9 , filed on March 6, 2014.

The present invention relates to a method to easily determine re-buffering events which can be later used, e.g. by the methods as set out in the paper "session reconstruction for HTTP adaptive streaming" by Raf Huysegems et Al, IWQOS, 2012 IEEE 20th international workshop on Quality of Service, page 1-9, XP032207367, to determine a quality score of this session.

Online video traffic becomes dominant in the Internet. The Quality of Experience, hereafter abbreviated with QoE, during video watching is an important success factor in the online video market. With the popularity and growth of HTTP Adaptive Streaming, hereafter abbreviated by HAS, based video delivery, and the increasing number of operational HAS deployments, network and content delivery providers have raised the interests to monitor the perceived end-user quality of experience of HAS sessions over their network, as this would tell them how satisfied the end-users are with the viewed videos. However, the occurrence and duration of re-buffering events are usually only known to the client application and up-streaming quality reports for providing such information to the content providers is not always present.

A network-based QoE assessment mechanism for understanding the QoE events occurring at the client side is thus described in the earlier mentioned paper. This mechanism needs QoE relevant parameters such as quality level, quality switching, etc. as represented by the requested bitrates and their changes on one hand, and freeze-related parameters , also denoted re-buffering parameters, including the presence of a re-buffering event (or not), the position of re-buffering events, duration of re-buffering events, frequency of re-buffering events, etc., on the other hand. While quality related QoE parameters can be directly derived from the sequence of HTTP "GET" messages received by network- or CDN- providers, re-buffering-related parameters have to rely on session reconstruction as set out in the above mentioned patent application.

Therein it is further mentioned that in order to obtain the freeze or-re-buffering-related QoE parameters at the server or at a network module, all sessions, regardless if they contain re-buffering events or not, have to be fully reconstructed. And only after a session reconstruction is performed, one is able to know whether the session contains re- buffering events or not. This implies not only a huge waste of computational resources, as also the good sessions without re-buffering events, are to be reconstructed. But also the session reconstruction requires manual efforts to define a set of heuristic dependent rules for reconstruction; which can lead to some scalability problems when new heuristics appear.

There is thus a need to rapidly and automatically identify whether a video session contains a re-buffering event or not, such a re-buffering event corresponding to a freeze, before the session reconstruction is performed. This will avoid to reconstruct freeze-free sessions, such as to only spend resources on problematic sessions.

It is thus an object of embodiments of the present invention to propose an improved method which does not show the inherent shortcomings of the prior art methods, thus to provide a system and method to calculate the easily identify the presence of freezes in video delivery sessions. According to embodiments of the present invention this object is achieved by the provision of a method for determining the existence of re-buffering events in an http adaptive streaming video session between a client and a server, in a network node, said method comprising the steps of , in an operational mode:

- Gathering subsequent http GET messages for said video session
- Extracting a feature vector for said video session
- Comparing said feature vector with a task dependent feature set determined during an earlier performed training mode, such as to obtain a reduced feature set for said video session
- Deriving from said reduced feature set an indication of whether said video session contains a re-buffering event or not.

In this way a fully automated method is obtained for quickly identifying problematic video sessions or not.

In an embodiment said task dependent feature sets are such as to further enable the determination of the existence of re-buffering events exceeding a predetermined duration limit or not.

This further enables to determine whether, if a freeze or re-buffering is present, the freeze can be considered to be a "long" freeze or a short freeze, as determined by the predetermined threshold duration.

Similarly in another embodiment also the presence of multiple freezes can be detected, via another task dependent feature set.

In an embodiment said client is adapted to monitor, during training mode, the re-buffering events and to provide said information to said network node, such that said task dependent feature sets are obtained by comparing the feature vector for the video session during training with the real-time re-buffering data from the client, and to extract at least one most probably feature from said feature vector which is most indicative of a re-buffering event or not.

This guarantees that the task dependent feature sets are based on real measurements obtained by the clients.

In another embodiment during said training mode a model comprising a sequence of steps is determined for further applying to the reduced feature sets during said operational mode, such as to derive therefrom an indication of the existence of a re-buffering event or not.

These models are later used during the operational mode, to quickly assess the values of the reduced feature sets.

The present invention relates as well to a system for performing the above mentioned method, to a network node comprising such a system, and to a computer program adapted to perform the method steps when executed on a processing device.

The above and other objects and features of the invention will become more apparent and the invention itself will be best understood by referring to the following description of an embodiment taken in conjunction with the accompanying drawings wherein:

Fig1a shows a schematic of the operation of a system for determining re-buffering events in normal operating mode.
Fig. 1b shows a schematic of the operation of a system for determining re-buffering events in learning mode,
Fig. 2 shows details of an embodiment of the method used for feature extraction,
Figs. 3 and 4 shows details of an embodiment of a method used for obtaining task dependent feature sets, in training mode, and how to determine from the training results, and from online measurement, a quick assessment of the occurrence of (multiple) freezes and an indication of their length,
Fig. 5 gives an embodiment of the complete system

It is to be remarked that the functions of the various elements shown in the figures., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

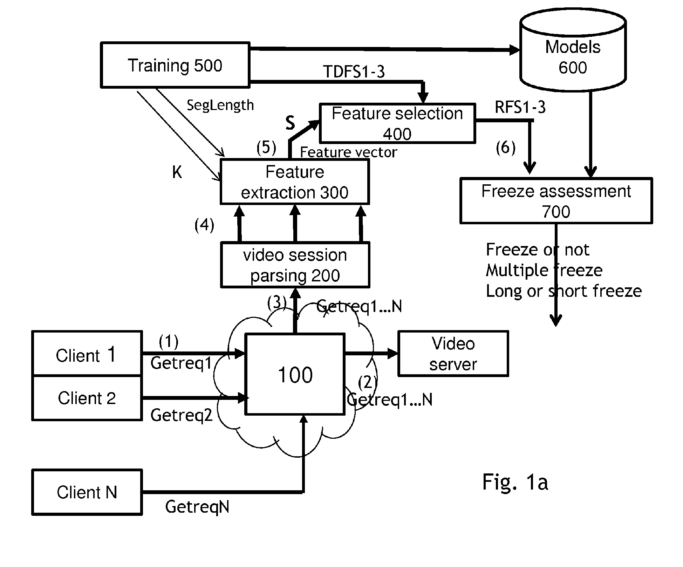

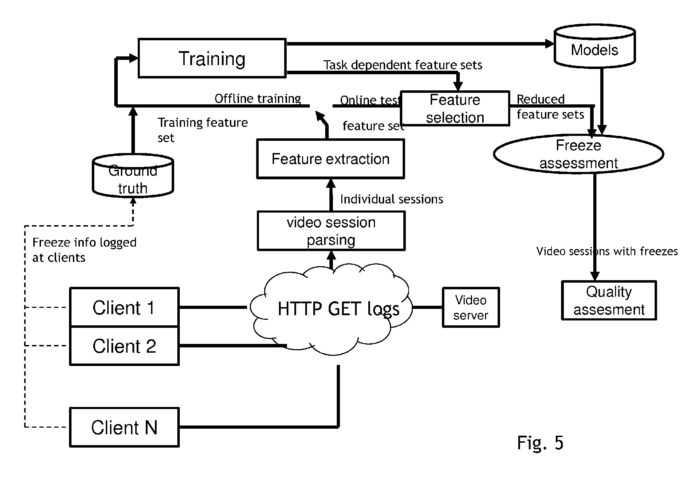

Figs. 5 and 1a-b show a high-level overview of an embodiment of a system for identifying freezes in http sessions. The system comprises several modules which can be realized using one single processor, or alternatively, can be distributed amongst several physical servers or processors within the network.

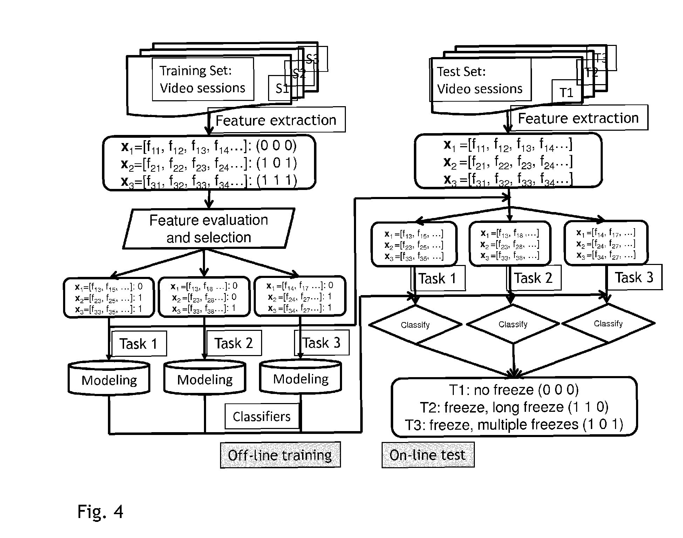

The network can be a mobile or a fixed network or any combination of them. The network is schematically represented by the cloud positioned in between a video server and a plurality of clients, denoted Client 1 to client N. The video delivery between the server and the client makes use of the http adaptive streaming protocol, implying that the respective clients each request, for each video segment of a respective video session between the client and the server, a particular quality, usually expressed in bitrate, from the server. These requests are denoted GETreq1 to GETreqN, for one segment and for respective clients 1 to N and these requests are sent by the respective clients in step (1) of fig. 1a. In order not to overload the drawing of fig. 1a, only one of a lot of successive requests per respective video session is shown. These GET requests are intercepted by a first module, denoted 100, included in an embodiment of the system. This module 100 is thus adapted to intercept, and, in the embodiments denoted on Figs 1a-b and Fig. 4, also to log or temporarily store, a copy these http "GET" requests sent from the N clients to the video server, before transmitting these GET request further unmodified to the video server in step (2).

In the embodiment of Figs 1a-b, Module 100 thus collects and stores a copy of all successive Get requests for all sessions between the different video clients and the video server, until termination of these respective sessions. Once the session is terminated, the thus logged GET requests are provided in step (3) to a video session parsing module 200.

In another embodiment which is not shown in the drawings, the module 100 is only intercepting the http GET requests, and immediately provides a copy to the video parsing module 200, which then is adapted to collect and store these GET requests. The main function of this module 200 is to parse, thus to analyze the http GET requests it has received from the logging module 100, and to classify the respective received requests to a single video session from a respective client having a respective IP address or a unique session key. In this way the subsequent GET data of the N sessions of the N clients are classified into N categories, one category per video session.

After this classification, the N respective sets of GET request data, one set for each respective video session, are provided in step (4) to a feature extraction module 300, which is adapted to generate a single feature vector for each of the N video sessions. To this purpose the module 300 already needs some data from the training module, more in particular a parameter SegLength, representative of the estimated segment length , and a parameter K, representative of a number of neighboring segments to be considered, which parameters were earlier determined by the training module 500.

Module 300 then determines a set of 2K values, which, if placed in a vector, will constitute a feature vector of 40 elements in case K=20.

However K can have also a different value.

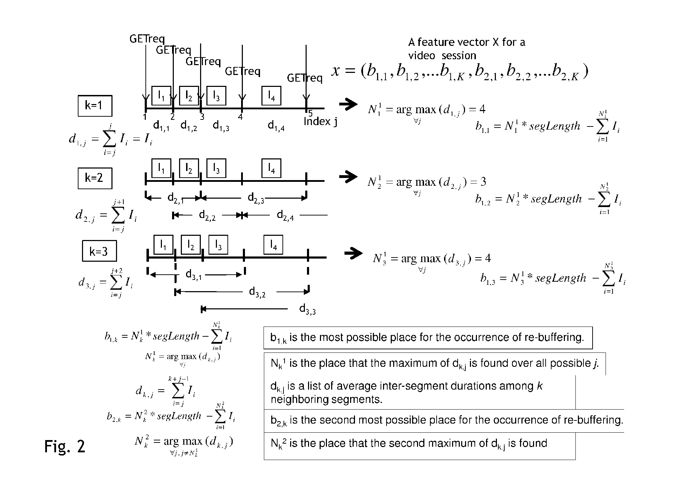

In the example depicted in Fig. 2, three exemplary situations are depicted for K having a value ranging from 1 to 3.

In fig. 2 , the upper line left schematically shows a timing diagram of one particular video session of one particular client. In order not to overload the drawing, the index for identifying this client is omitted. The occurrences of the successive GET requests for this client for requesting successive segments, and as provided by the video session parsing module, are indicated by means of the arrows from top to bottom and ending on that time line. Each time a GET request is received, index j goes up. This index is also schematically shown at the bottom of this time line, and starts with value 1, when the first GET request is received. The successive time intervals in between successive GET request are indicated by Ij, j again indicative of the discrete number of instance in time, related to the GET occurrence. The video segment length is assumed to be fixed, and based on this assumption, a list of average inter-segment durations amongst $K$ neighboring segments can be calculated as $d_{k,j} = \sum_{i=j}^{k-1+j} I_i$, where $I_j$ is the time between two consecutive requests with index j+1 and j.

For k=1, this value d1,j then will always be equal to Ij as is shown below this upper timeline.

The lowest estimated buffer time for a $k$-segment window, which is treated as a potential place for the occurrence of re-buffering, is calculated as

$$b_{1,k} = N_k^1 * segLength - \sum_{i=1}^{N_k^1} I_i \qquad (1)$$

where.

$$N_k^1 = \arg\max_{\forall j}(d_{k,j}) \qquad (2)$$

For the sake of detecting multiple freezes, we also include the second lowest estimated buffering time, $b_{2,k}$ into our feature set.

$$b_{2,k} = N_k^2 * segLength - \sum_{i=1}^{N_k^2} I_i \qquad (3)$$

Where

$$N_k^2 = \arg\max_{\forall j, j \neq N_k^1}(d_{k,j}) \qquad (4)$$

For k=1, only one neighbor is considered for each segment, as earlier mentioned and $d_{k,j} = \sum_{i=j}^{k-1+j} I_i$

then is equal to the duration between two consecutive segments j+1 and j. Successive values of $d_{1,j}$ for successive values of j are schematically indicated below each video segment.

According to formula (2),

$$N_1^1 = \arg \max_{\forall j}(d_{1,j}) = 4$$

as the index j, for the longest of all $d_{1,j}$ intervals (which is $d_{1,4}$), corresponds to 4, for this specific example

According to formula (1) a value of $b_{1,1}$ is calculated being equal to

$$4*SegLength-(l1+l2+l3+l4)$$

This is considered as indicative of the most probably time of occurrence of a re-buffering event over the period (11+12+13+14).

According to formula (4)

$$N_k^2 = \arg \max_{\forall j, j \neq N_k^1}(d_{k,j}) \equiv 3$$

For this specific example.

According to formula (2), a value for $b_{2,1}$ is calculated as :

$$3*Seglength-(l1+l2+l3)$$

For this specific example, and which relates to the second most probable instance in time of having a re-buffering event, for this specific example

For k=3, or more, similar calculations can be performed, the difference will be the range of neighboring intervals, constituting a window for checking freeze occurrences, which is directly influenced by the value of K. This is further schematically denoted in Fig. 2, via the other time lines. In order not to overload this drawing the index j indication is omitted from these time lines. However it is similar as indicated in the upper time line.

In summary, for a particular value of K and for a particular session a feature vector

$$x = (b_{1,1}, b_{1,2}, ... b_{1,K}, b_{2,1}, b_{2,2}, ... b_{2,K})$$

is extracted to represent the high level information of one single video session. So a single video session is now represented by a feature vector with a number of columns equal to 40, in case K=20.

During normal operation, the feature vectors of the N clients are then provided to a feature selection module 400. In normal operating regime, the switch S in Fig.1a is therefore put to the right side, thus providing the video session features to module 400. In that module they are compared with data TDFS received from a training module 500, as indicated in Fig. 1a.

The output of Module 400 are reduced feature sets, denoted RFS, which will be explained, together with the operation of this module , in a later paragraph.

These RFS results are next provided to module 700 which uses the reduced feature sets, and models, received from a model storage module 600. Its operation will also be discussed in a later paragraph. The output of this module 700, denoted freeze assessment module, will be a short summary, per video session, of the fact that whether there are freezes or not, whether multiple freezes are present, and whether it concerns a short or a long freeze. More details will be provided in a later paragraph. These output data are then provided to a module for assessing the quality of these video streams, such as set out in the earlier mentioned paper.

To obtain the models, the task dependent feature sets, the SegLength and K values, the training module 500 first needs to get training data. To this purpose the switch S is turned to the left side and in parallel also the clients have to provide data related to the freeze occurrences to the training module, via another module 800.

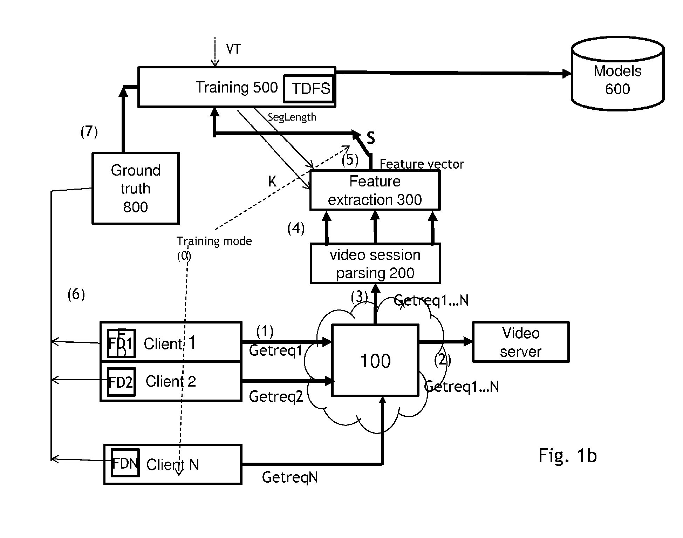

There is no specific restriction to the training set of video sessions, any http adaptive streaming session between the N clients and the server can be used for such training purposes. The fact that the system is now operating in training mode is also information which is provided to the N clients, such that from that moment on, they start to activate their freeze detection modules, as shown in Fig. 1b. This training mode indication is indicated by the dashed arrow. This indication is generally provided at start-up, by the network operator. Usually, after the model has been trained, it stays quite stable for a certain period.

However, if the network operator wants to detect an updated tendency of re-buffering events, it may start to collect true re-buffering events at the client side (ground truth) and re-train the model, to adapt the new tendency.

The provision of this control signal, both for controlling the position of the switch, as the clients such as to provide their freeze measurements, is given in step (0).

As in normal operation mode , the GET messages associated to the sessions allocated to the training are also intercepted, logged , parsed and subject to feature extraction , just as in normal operation. The extracted feature vectors , which look similar to these during normal operation, are now however provided to the training module by means of the switch thus being placed to the left position. The value used for K, which is not yet known at this point in time, is to be determined in an iterative way.

The value of SegLength is derived from the longest training set without any freeze occurrence. This thus may imply several iterations to be performed, especially in case no freeze-free sessions are present in a first iteration.

The freezes which had occurred during the streaming of these training video sessions are detected by the N clients, by means of respective freeze detection modules FD1 to FDN in the respective clients. There are a few implementations of such a freeze detection module :

A first one makes use of a video player plug-in application. This application can be coupled with the video player in the client, e.g. client 1, for assessing the status of the player (for instance, the instant buffer filling level). When the instant buffer filling level is 0, the plug-in application treats it as a picture-freeze on the video player, and then send the report of freeze information FR1 to module 800. This information contains the start and end time of all the freezes recorded per respective session.

A second one may use a functionality of Advanced Logging in Microsoft Smooth Streaming in HAS clients. One field in the Advanced Logging is "c-buffercount", indicating the number of times re-buffering is required in the frame level for a certain period (the default is 30 seconds).

The aggregation of all freeze information, denoted FR1 to FRN for respective clients 1 to clients N, from the training set is denoted "ground truth" . This is provided to the training module 500.

The training module itself is adapted to compare the information received from the clients, thus, per session an indication of when freezes occur and how long they last, with the associated feature vector.

As we are only interested in knowing three items per session, namely

(1) Is there at least one freeze or not ?
(2) Is there at least one long freeze ?
(3) Is there more than one freeze ?

A value of 0 or 1 is attributed to each of these statements or events, by the training module 500.

Whenever a freeze is long or short is determined by a predetermined threshold value, which can still be manually input, e.g. by means of input signal VT again determined by the network operator. Different operators may therefore have a different tolerance of length of freezes. Some may think a 10-second freeze is a long freeze, and set the threshold at that value, but others may treat a 5-second freeze as a long freeze.

The learning module is then adapted to analyze the data from the clients, to compare the freezes as detected from them with this threshold value, and to determine whether at least one of them exceeds the threshold or not. If yes, the result will be a "1".

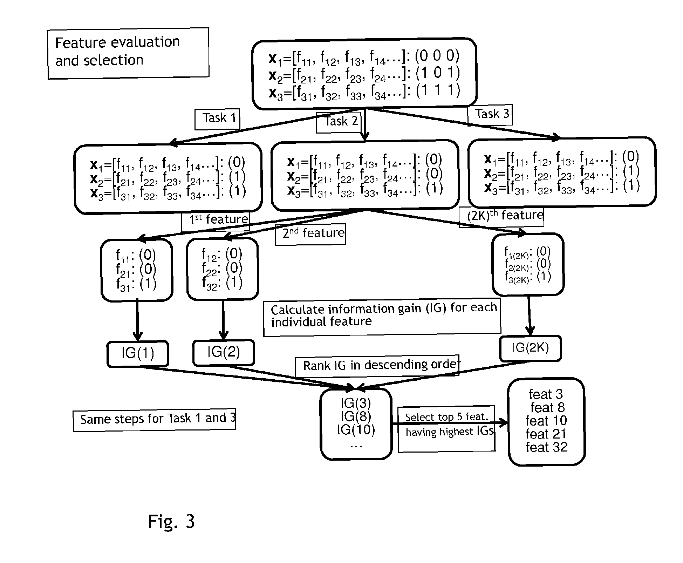

This is schematically shown in Fig. 3, showing in the upper box the feature vectors x1,x2 and x3, for sessions 1,2,3 , and the associated event vector with the logical values for the result of above three questions.

Thus the first session clearly has no freezes, no long freezes and no multiple freezes, as the associated 3 column event vector is (0,0,0).

The second session has at least one freeze, no long freeze, and more than one freeze, as is clear from the event vector (1,0,1).

In an analogous way, the third session has at least one freeze, at least one long freeze, and more than one freeze.

In a next stage the training module will then try to make a correlation between the 3-column event vector and the 2K features of the feature vectors themselves.

On fig. 3 this is further explained for the second task or event (presence of at least one long freeze or not).

For each of the 2K features, e.g. the first feature, of the 3 sessions of the Figure (in real life about 10000 training sessions or more can be considered) a check is performed by determining an information value of each individual feature with respect to the value of the event vector. This is schematically shown in Fig. 3 where for the three sessions, the information of the first feature is checked against the result of the second task or event. Information with respect to such procedures can be found e.g. in the book by Mitchell, Tom M. (1997). Machine Learning. The Mc-Graw-Hill Companies, Inc. ISBN 0070428077.

The information gain for each of the 2K features is then obtained and ranked and the 5 highest ranked features are retained, as they thus represent the features having the highest information content with respect to the second task or event.

This procedure is repeated for each task or event, such that a reduced subset of features of the feature vectors, for a specific task is retained. This information is called the task dependent feature sets, and thus indicates that for the second task or event, features 3,8,10,21 and 32 have to be retained, on the example of Fig. 3. This information, denoted TDFS2 is then later provided to the feature selection module 400, such that, for task 2, a reduced feature vector or feature set is output, thus being vector with only feature 3,8,10,21 and 32.

For the other tasks a similar reduced information set is provided. For each task this information is, during the training mode, stored in a memory TDFS of the training module 500.

Another function of the training module is to provide a set of models for each task. With model is meant a set of instructions and decision results which are to be performed in a later stage at the reduced feature sets, such as to determine from these reduced feature sets, whether or not the result of the particular event or task is obtained. Thus for event "long freeze or not" , a list of operations with accompanying decisions is to be generated for later application of reduced feature vectors from the real operation mode, such as to decide from these 5 values whether or not a long freeze is present.

Such models can be obtained e.g. using the principles as set out in the book by Quinlan, J. R. C4.5: Programs for Machine Learning. Morgan Kaufmann Publishers, 1993.

The training module stores the thus obtained models in a models database. In figures 1a-b this is depicted as a separate module, but in other embodiments this models memory can as well be incorporated into the training module itself.

When in operational mode, module 700 is to perform a freeze assessment on the reduced feature sets from the real data, this module thus also uses the model information from the models database and is then using these instructions on the reduced feature vector to therefrom obtain a result for the specific task or event.

This is depicted in Fig. 4 where during the on-line test, shown in the right part of the figure, for each task the reduced feature sets are analysed in modules denoted "classify", such that for each session, and for each task a value is obtained. The three values are then again combined into a three- column event vector, for the on-line session. This information is then provided to the quality assessment module such as described in

In summary, using a few high-level features extracted from video sessions without reconstructing sessions or manually setting rules, simple and automated method is obtained to identify the following three tasks: the occurrence of re-buffering event, the existence of long re-buffering and the existence of multiple re-buffering events.

Compared to earlier freeze analyzers e.g. the one proposed in the not yet published European Patent Application 13305743, a speed increase with a factor of 33 is obtained. Plus, embodiments according to the present invention does not require the manual effort to discover the reconstruction rules.

An overview of the complete system comprising all different module is shown in fig. 5 . In this embodiment the freeze assessment module is adapted to output and indication of the problematic video sessions (the ones with at least one freeze), for further provision to the quality assessment module.

While the principles of the invention have been described above in connection with specific apparatus, it is to be clearly understood that this description is made only by way of example and not as a limitation on the scope of the invention, as defined in the appended claims.

**Claims**

1.  Method for determining the existence of re-buffering events in an http adaptive streaming video session between a client and a server, in a network node, said method comprising the steps of , in an operational mode:

     - Gathering subsequent http GET messages for said video session
     - Extracting a feature vector for said video session
     - Comparing said feature vector with a task dependent feature set determined during an earlier performed training mode, such as to obtain a reduced feature set for said video session
- Deriving from said reduced feature set an indication of whether said video session contains a re-buffering event or not.

2. Method according to claim 1 whereby said task dependent feature sets are such as to further enable the determination of the existence of re-buffering events exceeding a predetermined duration limit or not.

3. Method according to claim 1 or 2 wherein during said training mode said client is adapted to monitor the re-buffering events and to provide said information to said network node, such that said task dependent feature sets are obtained by comparing the feature vector for the video session during training with the real-time re-buffering data from the client, and to extract at least one most probably feature from said feature vector which is most indicative of a re-buffering event or not.

4. Method according to claim 3 wherein during said training mode a model comprising a sequence of steps is determined for further applying to the reduced feature sets during said operational mode, such as to derive therefrom an indication of the existence of a re-buffering event or not.

5. System for determining the existence of re-buffering events in an http adaptive streaming video session between a client and a server, said system being adapted to act in an operational mode and in a training mode, said system being adapted to , when in operational mode:

   - Gather subsequent http GET messages for said video session
   - Extract a feature vector for said video session
   - Compare said feature vector with a task dependent feature set determined during an earlier performed training mode, such as to obtain a reduced feature set for said video session
   - Derive from said reduced feature set an indication of whether said video session contains a re-buffering event or not, and to provide said information at an output of said system.

6. System according to claim 5 further being adapted to determine whether the duration of said re-buffering event exceeds a predetermined threshold of not.

7. System according to claim 5 or 6 being adapted to, when in training mode , to receive real-time data of the re-buffering events of a training video session provided by said client, to compare them with the feature vector for the video session during training, to extract at least one most probably feature from said feature vector which is most indicative of a re-buffering event or not.

8. System according to claim 7 further being adapted to, during said training mode, determine a model comprising a sequence of steps for further applying to the reduced feature sets during said operation mode, such as to derive therefrom an indication of the existence of a re-buffering event or not.

9. Network node of a network for delivering http adaptive streaming video sessions between a server and a plurality of clients, said network node comprising a system in accordance to any of the previous claims 5 to 8.

10. Computer program adapted to perform the method according to any of the claims 1 to 4.

11. A computer readable storage medium comprising the program of claim 10.

Fig. 1a

Fig. 1b

Fig. 2

$d_{1,j} = \sum_{i=j}^{j} I_i = I_i$

$d_{2,j} = \sum_{i=j}^{j+1} I_i$

$d_{3,j} = \sum_{i=j}^{j+2} I_i$

A feature vector X for a video session

$x = (b_{1,1}, b_{1,2},...b_{1,K}, b_{2,1}, b_{2,2},...b_{2,K})$

$N_1^1 = \arg\max_{\forall j}(d_{1,j}) = 4$

$b_{1,1} = N_1^1 * segLength - \sum_{i=1}^{N_1^1} I_i$

$N_2^1 = \arg\max_{\forall j}(d_{2,j}) = 3$

$b_{1,2} = N_2^1 * segLength - \sum_{i=1}^{N_2^1} I_i$

$N_3^1 = \arg\max_{\forall j}(d_{3,j}) = 4$

$b_{1,3} = N_3^1 * segLength - \sum_{i=1}^{N_3^1} I_i$

$b_{1,k} = N_k^1 * segLength - \sum_{i=1}^{N_k^1} I_i$

$N_k^1 = \arg\max_{\forall j}(d_{k,j})$

$d_{k,j} = \sum_{i=j}^{k+j-1} I_i$

$b_{2,k} = N_k^2 * segLength - \sum_{i=1}^{N_k^2} I_i$

$N_k^2 = \arg\max_{\forall j, j \neq N_k^1}(d_{k,j})$

| |
|---|
| $b_{1,k}$ is the most possible place for the occurrence of re-buffering. |
| $N_k^1$ is the place that the maximum of $d_{k,j}$ is found over all possible $j$. |
| $d_{k,j}$ is a list of average inter-segment durations among $k$ neighboring segments. |
| $b_{2,k}$ is the second most possible place for the occurrence of re-buffering. |
| $N_k^2$ is the place that the second maximum of $d_{k,j}$ is found |

Fig. 3

Fig. 4

Fig. 5

Europäisches
Patentamt

European
Patent Office

Office européen
des brevets

# EUROPEAN SEARCH REPORT

**Application Number**

EP 14 30 6801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | RAF HUYSEGEMS ET AL: "Session reconstruction for HTTP adaptive streaming: Laying the foundation for network-based QoE monitoring", QUALITY OF SERVICE (IWQOS), 2012 IEEE 20TH INTERNATIONAL WORKSHOP ON, IEEE, 4 June 2012 (2012-06-04), pages 1-9, XP032207367, DOI: 10.1109/IWQOS.2012.6245987 ISBN: 978-1-4673-1296-7 * the whole document * | 1-11 | INV. H04N21/2343 H04N21/845 H04N21/24 H04L12/26 H04L29/06 H04N21/442 H04N21/658 |
| X | US 2013/067109 A1 (DONG WEI [US] ET AL) 14 March 2013 (2013-03-14) | 1,2,5,6, 9-11 | |
| Y | * figures 2-5 * * paragraph [0021] - paragraph [0060] * | 3,4,7,8 | |
| X | EP 2 525 587 A1 (ALCATEL LUCENT [FR]) 21 November 2012 (2012-11-21) | 1,2,5,6, 9-11 | |
| Y | * figures 2, 3 * * paragraph [0053] - paragraph [0069] * * paragraph [0078] - paragraph [0090] * | 3,4,7,8 | TECHNICAL FIELDS SEARCHED (IPC) |
| Y | VANEET AGGARWAL ET AL: "Prometheus", PROCEEDINGS OF THE 15TH WORKSHOP ON MOBILE COMPUTING SYSTEMS AND APPLICATIONS, HOTMOBILE '14, 26 February 2014 (2014-02-26), pages 1-6, XP055187386, New York, New York, USA DOI: 10.1145/2565585.2565600 ISBN: 978-1-45-032742-8 | 3,7 | H04N H04L |
| A | | 1,2,4-6, 8-11 | |

-/--

The present search report has been drawn up for all claims

| Place of search | Date of completion of the search | Examiner |
|---|---|---|
| Munich | 6 May 2015 | Döttling, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 14 30 6801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHIJUN HUANG ET AL: "A statistical-feature-based approach to internet traffic classification using Machine Learning", ULTRA MODERN TELECOMMUNICATIONS&WORKSHOPS, 2009. ICUMT '09. INTERNATIONAL CONFERENCE ON, IEEE, PISCATAWAY, NJ, USA, 12 October 2009 (2009-10-12), pages 1-6, XP031574406, ISBN: 978-1-4244-3942-3 * the whole document * ----- | 3,4,7,8 | |
| | | | **TECHNICAL FIELDS SEARCHED (IPC)** |

The present search report has been drawn up for all claims

| Place of search | Date of completion of the search | Examiner |
|---|---|---|
| Munich | 6 May 2015 | Döttling, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 30 6801

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2015

| Patent document cited in search report | Publication date | Patent family member(s) | Publication date |
|---|---|---|---|
| US 2013067109 A1 | 14-03-2013 | EP 2615777 A1<br>US 2013067109 A1 | 17-07-2013<br>14-03-2013 |
| EP 2525587 A1 | 21-11-2012 | CN 103535047 A<br>EP 2525587 A1<br>JP 2014519259 A<br>KR 20140003648 A<br>US 2014089993 A1<br>WO 2012156224 A1 | 22-01-2014<br>21-11-2012<br>07-08-2014<br>09-01-2014<br>27-03-2014<br>22-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14305323 A

- EP 13305743 A

**Non-patent literature cited in the description**

- **RAF HUYSEGEMS et al.** *IWQOS, 2012 IEEE 20th international workshop on Quality of Service,* 2012, 1-9

- **MITCHELL, TOM M.** Machine Learning. The Mc-Graw-Hill Companies, Inc, 1997
- **QUINLAN, J. R.** Programs for Machine Learning. Morgan Kaufmann Publishers, 1993